Europäisches Patentamt

European Patent Office

Office européen des brevets

(11) Veröffentlichungsnummer : **0 058 366
B1**

(12) **EUROPÄISCHE PATENTSCHRIFT**

(45) Veröffentlichungstag der Patentschrift :
30.07.86

(51) Int. Cl.⁴ : **C 08 F291/00, C 08 F257/02,
C 08 G 65/04, D 21 H 1/28**

(21) Anmeldenummer : 82100890.1

(22) Anmeldetag : 08.02.82

(54) **Wässrige Dispersionen, ihre Herstellung und Verwendung.**

(30) Priorität : 17.02.81 DE 3105779

(43) Veröffentlichungstag der Anmeldung :
25.08.82 Patentblatt 82/34

(45) Bekanntmachung des Hinweises auf die Patenterteilung : 30.07.86 Patentblatt 86/31

(84) Benannte Vertragsstaaten :
DE FR GB IT NL

(56) Entgegenhaltungen :
EP-A- 0 018 447
EP-A- 0 024 602
DE-A- 1 495 722
FR-A- 2 327 265
GB-A- 992 756
US-A- 3 428 582
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Rahlwes, Dieter, Dr.
Ludwig-Girtler-Strasse 1
D-5090 Leverkusen 1 (DE)
Erfinder : Wallpott, Gottfried
Gnadentaler Allee 14
D-4040 Neuss (DE)
Erfinder : Goossens, John
Roggendorfstrasse 51
D-5000 Köln 80 (DE)
Erfinder : Beck, Ulrich, Dr.
Weiherstrasse 17
D-5303 Bornheim 3 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft wäßrige Dispersionen von Polymerisaten mit aufgefropften hydrophilen Monomeren und ein Verfahren zu ihrer Herstellung. Diese Dispersionen eignen sich zur Herstellung verbesserter Überzugsmassen für flächige Substrate, insbesondere für gestrichene Druckträger.

Bei der Herstellung gestrichener Papiere, die zum Drucken geeignet sind, werden heute weitgehend synthetische Bindemittel auf der Basis von Copolymerisaten aus Acrylsäureestern, Styrol, Butadien und ungesättigten Carbonsäuren eingesetzt, wobei die Copolymerisate in Form wäßriger Dispersionen verwendet werden. Diese Bindemittel werden den hohen Anforderungen auf den schnell laufenden Beschichtungsmaschinen nur teilweise gerecht. So müssen das Viskositätsverhalten, das Wasserrückhaltevermögen, das Migrationsverhalten in der Pigmentmatrix und die Rupffestigkeit oft durch Zusatz weiterer Komponenten, sogenannter Co-Binder, eingestellt werden. Beispielsweise werden als Co-Binder Mischpolymerisate aus Vinylacetat und Acrylamid (DE-OS 2 450 039) eingesetzt. Man erreicht dabei jedoch nur eine Verbesserung von einzelnen Eigenschaften, nicht aber eine gleichzeitige Qualitätsverbesserung für die Mehrzahl der geforderten Eigenschaften.

Aus der DE-OS 2 703 418 sind pigmenthaltige Papierstreichmassen bekannt, die außer einem üblicherweise als Binder verwendeten synthetischen Latex auf Basis von Polyacrylaten, Polymethacrylaten, Styrol-Butadien-Polymerisaten, oder Polymerisaten des Vinylacetats in Form von wäßrigen Dispersionen als Co-Binder ein hochmolekulares, wasserlösliches Polymerisat enthalten. Wesentlich für diese Papierstreichmassen ist die Herstellung des wasserlöslichen Polymerisats durch Polymerisation in einer Wasser-in-Öl-Emulsion. Dadurch lassen sich das Viskositätsverhalten, das Wasserrückhaltevermögen und die Rupffestigkeit verbessern. Jedoch bleibt es nacht wie vor ein Problem, hohe Filmhärte bei gleichzeitig gutem Bindevermögen, geringe Neigung zur Migration in der Pigmentmatrix, besonders gute Faserabdeckung, gute Opazität und insbesondere bei LWC-Papieren (geringeres Flächengewicht) ein geringeres Wegschlagen der Druckfarbe in das Papier zu erreichen.

Weiterhin ist aus der DE-OS 1 495 722 ein Verfahren zur Herstellung von Pfropfpolymerisaten durch Umsetzen von Acrylamid mit im wesentlichen amorphen, tertiäre Kohlenstoffatome enthaltenden Olefinmischpolymerisaten in wäßriger Dispersion mittels radikalischer Aktivierung bekannt, das dadurch gekennzeichnet ist, daß als tertiäre Kohlenstoffatome enthaltende Olefinmischpolymerisate ternäre, ungesättigte Mischpolymerisate aus (1) Ethylen, (2) Propylen oder Buten und (3) einem Dien oder Trien verwendet werden.

Obgleich die Verfahrensprodukte zur Papierveredelung empfohlen werden, lassen sich die vorstehend genannten Nachteile nicht vermeiden.

Es wurde nun gefunden, daß mit bestimmten Dispersionen als Binder verbesserte Papierstreichmassen erhalten werden, die ohne einen weiteren Co-Binder auskommen.

Gegenstand der Erfindung sind daher wäßrige Dispersionen mit einem Feststoffgehalt von 35 bis 65 Gew.-% eines Pfropfcopolymerisates aus einem Pfropfsubstrat aus einer wäßrigen Dispersion eines Mischpolymerisates auf Basis von zwei oder mehreren der Verbindungen Styrol, Butadien, Isopren, (Meth)-Acrylsäure-$C_1$-$C_{12}$-Alkylestern und (Meth)-Acrylsäure, auf das ein oder mehrere hydrophile Monomere aus der Reihe Fumarsäure-, Itakonsäure-, Maleinsäure- oder (Meth)-Acrylsäureamid, Vinylpyrrolidon und Ethylenoxid aufgepfropft sind, wobei bis zu 60 % der hydrophilen Monomere durch ein oder mehrere hydrophobe Monomere ersetzt sein können.

Geeignete hydrophobe Monomere sind Styrol, Butadien, Isopren, (Meth) Acrylsäure-$C_1$-$C_{12}$-Alkylester. Vorzugsweise bestehen die Pfropfsubstrate aus Styrol/Butadien-Mischpolymerisaten mit 40 bis 75 Gew.-% Styrol, 21 bis 59 Gew.-% Butadien und 1 bis 4 Gew.-% einer oder mehrerer ungesättigter Carbonsäuren. In einer weiteren bevorzugten Ausführungsform bestehen die Pfropfsubstrate aus Mischpolymerisaten mit 40 bis 75 Gew.-% Styrol, 21 bis 59 Gew.-% Acrylsäure-$C_1$-$C_{12}$-Alkylester und 1 bis 4 Gew.-% einer oder mehrerer ungesättigter Carbonsäuren. In einer besonders bevorzugten Form bestehen die Pfropfsubstrate aus Mischpolymerisaten mit 40 bis 75 Gew.-% Styrol, 21 bis 59 Gew.-% Butylacrylat und 1 bis 4 Gew.-% ungesättigter Carbonsäuren. In den bevorzugten Ausführungsformen kommen als ungesättigte Carbonsäuren Fumar-, Itakon-, Malein- und insbesondere (Meth)-Acrylsäure in Frage.

Für die Pfropfung werden erfindungsgemäß 0,5 bis 15 Gew.-%, bezogen auf Pfropfsubstrat, an wasserlöslichen oder zumindest hydrophilen Monomeren eingesetzt, wobei (Meth)-Acrylamid bevorzugt ist. Ganz besonders bevorzugt werden 0,5 bis 6 Gew.-% (Meth)-Acrylamid, bezogen auf Polymersubstrat, aufgepfropft.

Die Pfropfsubstrate werden in Form wäßriger Dispersionen nach den allgemein bekannten Techniken der Emulsionspolymerisation hergestellt. Diese Dispersionen dienen als Ausgangssubstanz für die nachfolgende Pfropfreaktion, bei deren Durchführung bestimmte Bedingungen einzuhalten sind, damit die erfindungsgemäßen Dispersionen reproduzierbar erhalten werden können.

Ein weiterer Gegenstand der Erfindung ist daher ein Verfahren zur Herstellung von wäßrigen Dispersionen mit einem Feststoffgehalt von 35 bis 65 Gew.-% eines Pfropfcopolymerisates aus einem Pfropfsubstrat wie vorstehend beschrieben in Form einer wäßrigen Dispersion mit einem Feststoffgehalt von 35 bis 65 Gew.-%, dadurch gekennzeichnet, daß man 0,5 bis 15 Gew.-%, bezogen auf das Pfropfsubstrat, hydrophile Monomere die bis zu 60 Gew.-% durch hydrophobe Monomere ersetzt sein können, zusammen mit etwa 0,5 bis 15 Gew.-% Wasser, bezogen auf Pfropfsubstrat, zugibt, so daß nach Beendigung der Reaktion der Ausgangsfestgehalt des Pfropfsubstrates im wesentlichen erhalten bleibt, und die Pfropfreaktion durch Zugabe eines üblichen Polymerisationsinitiators durchführt.

Als Polymerisationsinitiatoren eignen sich z. B. anorganische und organische Peroxide. Bei der erfindungsgemäßen Pfropfpolymerisation kann die Pfropfausbeute, das ist der Prozentanteil des Monomeren, der chemisch an das Pfropfsubstrat gebunden ist, zwischen 10 und 95 % liegen.

Die Pfropfreaktion wird vorzugsweise bei 70 bis 100 °C durchgeführt.

Als Beispiel für eine Ausführungsform wird ein 52 %iger Styrolbutadienlatex als Pfropfsubstrat eingesetzt, zu dem bei 95 °C 0,9 bis 1,7 Gew.-% Acrylamid, bezogen auf Pfropfsubstrat, mit 0,9 bis 1,7 Gew.-% Wasser, bezogen auf Pfropfsubstrat, in einer Portion oder chargenweise unter Rühren zugegeben wird. Die Reaktion wird durch Zugabe von 0,1 % Ammoniumperoxodisulfat gelöst in 1 Gew.-% Wasser, beides bezogen auf Pfropfsubstrat, gestartet und unter Rühren bis zum Ende der Reaktion bei 95 °C gehalten.

Durch die wäßrigen Dispersionen gemäß vorliegender Erfindung lassen sich die wichtigsten und meisten der geforderten Papierstreicheigenschaften gleichzeitig in einer Weise optimieren, die zu besseren Ergebnissen als bei bisherigen Co-Binder-Verfahren führen. Die erfindungsgemäßen wäßrigen Dispersionen werden bevorzugt zur Herstellung von Papierstreichmassen eingesetzt, doch sind andere Einsatzgebiete auch denkbar und möglich, wie z. B. die Herstellung von Überzugsmassen für andere Substrate wie Pappe, Karton, Textilien und Leder.

Das erfindungsgemäße Verfahren ermöglicht sowohl die gleichzeitige Optimierung vieler Eigenschaften als auch die gezielte, hervorragende Optimierung spezieller Stricheigenschaften, wie Kompressibilität, Mikro-Porosität, Farbaufnahme, Glätte und Bindevermögen.

Durch Verwendung der wäßrigen Dispersionen, d. h. der modifizierten Latices gemäß vorliegender Erfindung wird bei der Herstellung von Druckpapieren mit geringem Flächengewicht überraschend gefunden, daß der Latex nicht durch das Papier durchschlägt, daß die Faserabdeckung verbessert wird und sich eine homogene, gleichmäßige Strichmatrix ausbildet. Dadurch werden die Opazität, der Weißgrad und die Glätte verbessert und eine gleichmäßige und rasche Druckfarbenaufnahme bei gleichbleibendem bzw. verbessertem Bindevermögen erzielt. Der weitere Vorteil des erfindungsgemäßen Binders besteht darin, daß irreversible Verdickungen vermieden werden, die bei der bisher üblichen Verwendung von z. B. Polyvinylalkohol in Streichfarben auftreten können.

Die erfindungsgemäß modifizierten Latices bewirken im Vergleich zum Stand der Technik voluminösere und gleichmäßig mikroporösere Striche. Beim Offset-Druck bedingt dies eine rasche gleichmäßige Farbannahme, die besondere Vorteile beim Mehrfarbendruck naß in naß bietet.

Für den Tiefdruck bewirken die erfindungsgemäß modifizierten Latices eine hohe Kompressibilität und Glätte des Striches bei verminderter Kalanderarbeit. Durch die beschriebene Strichstruktur wird eine hohe rasche Farbannahme und hoher Druckglanz erzielt.

Wie bei Offset-Papieren besteht auch beim Tiefdruck der Wunsch nach steiferen Papieren. Die Herstellung steifer Papiere war bisher nicht möglich, weil beim Einsatz von Latices mit harten Filmen eine deutliche Verschlechterung der Druckeigenschaften auftrat : ungleichmäßige Porosität, verringerte Kompressibilität, schlechter Ausdruck (missing dots). Erfindungsgemäß, schlechter Ausdruck (missing dots). Erfindungsgemäß modifizierte Latices mit hartem Film ermöglichen es aufgrund der besonderen Strichstruktur unter Beibehaltung der für den Tiefdruck erforderlichen Eigenschaften erstmalig steife Papiere im Tiefdruckverfahren zu bedrucken.

Durch die gleichmäßige Einlagerung des modifizierten Binders in die Strichmatrix kann aufgrund seines hohen Bindevermögens der Binderanteil in der Strichmasse reduziert werden, was letztlich zu einer weiteren Verbesserung der Bedruckbarkeitseigenschaften führt.

<p align="center">Beispiel 1</p>

a) Herstellung des Pfropflatex

Carboxylierter Styrol-Butadien-Latex mit 60 % Styrol, 36 % Butadien und 4 % (Meth)acrylsäure und einem Festoffgehalt von 50 %, einer üblichen Filmhärte von 50-60 °Sh A und hohem Pigmentbindevermögen als Pfropfsubstrat wird zu Reaktion gebracht mit :
    a) 2 % Acrylamid = Pfropflatex A
    b) 2 % Methacrylamid = Pfropflatex B,
wobei sich die Prozentangaben auf Pfropfsubstrat beziehen. Die Latexeigenschaften sind in Tabelle 1 aufgeführt.

<p align="center">Tabelle 1</p>

| Latex | A | B | unbehandeltes Pfropfsubstrat |
|---|---|---|---|
| Feststoffgehalt % | 50 | 50 | 50 |
| pH-Wert | 5,0 | 5,3 | 5,2 |
| Viskosität mPa.s | 210 | 140 | 95 |
| Filmhärte °Sh A | 82-71 | 80-69 | 56-48 |

<p align="center">3</p>

b) Herstellung der Streichmasse und Durchführung des Streichversuches

Zur Bereitung einer Papierstreichmasse, die zur Herstellung von Papier für den Offsetdruck geeignet ist, werden 100 g China Clay in ca. 65 %iger wäßriger Anschlämmung unter Verwendung von 0,2 g Ammoniakwasser und 0,3 g Natriumpolyphosphat dispergiert. Zu der homogenen Suspension werden jeweils 10 % (Polymerfeststoff, bezogen auf Clay) der unter a) beschriebenen Latices zugegeben. Mit Ammoniakwasser wird der pH-Wert auf 8,5 eingestellt, nachdem der Endfeststoffgehalt der Streichfarbe mit Wasser auf 55 % eingestellt wurde. Die jeweilige Zusammensetzung ist aus Tabelle 2 ersichtlich.

Tabelle 2

Zusammensetzung der Papierstreichmassen in g

| Versuch | 1 | 2 | 3 |
|---|---|---|---|
| Wasser zum Dispergieren | | 53,8 | |
| Wasser zur Endeinstellung | | 26,2 | |
| Natriumpolyphosphat | | 0,3 | |
| China Clay Dinkie A | | 100 | |
| Pfropflatex A | 20 | - | - |
| Pfropflatex B | - | 20 | - |
| Pfropfsubstrat | - | - | 20 |
| pH-Wert | | 8,5 | |
| Feststoffgehalt | | 55 | |

Die Eigenschaften der Streichmassen sind in Tabelle 3 aufgeführt.

Nach Beruhigung und Entlüftung werden die so hergestellten Streichmassen mit Hilfe einer Schaber-Versuchsstreichmaschine, bei einer Geschwindigkeit von 200 m/min., auf ein holzhaltiges, gebleichtes Rohpapier aus 55 % Holzschliff und 45 % gebleichtem Sulfitzellstoff (Nadelholz), einem Aschegehalt von 9,9 % und einem Flächengewicht von 50 g/m², beidseitig mit einem Auftragsgewicht von 8-10 g/m² je Seite (trocken) aufgestrichen.

Auch nach längerer Laufzeit bildet sich bei den Streichmassen mit gepfropftem Latex kein Koagulat oder Belag, weder am Schaber noch auf der Gegenwalze. Ebenso ist kein Durchschlagen der Streichmasse auf die Gegenwalze festzustellen. Die gestrichenen Papiere werden anschließend über einem Superkalander (2 Durchgänge) satiniert und nach Klimatisierung bei 20 °C und 65 % relativer Luftfeuchtigkeit geprüft.

Die Prüfergebnisse sind in Tabelle 4 zusammengestellt.

Tabelle 3

Eigenschaften der Papierstreichmassen

| Versuch | 1 | 2 | 3 |
|---|---|---|---|
| Feststoffgehalt (%) | 54,9 | 55,1 | 54,8 |
| pH-Wert | 8,4 | 8,5 | 8,4 |
| Viskosität (mPa.s) | | | |
| Brookfield, sofort | 594 | 670 | 390 |
| Brookfield, nach 24 Std. | 682 | 743 | 430 |
| Rheomat | | | |
| bei D = 3,5·10$^1$ | 320 | 342 | 376 |
| bei D = 1·10$^3$ | 42 | 44 | 49 |
| Stockpunkt % | 76,8 | 75,2 | 79,1 |
| Wasserrückhaltevermögen (Vergleich zur nicht gepfropften Latex) | leicht verbessert | stärker verbessert | |

# 0 058 366

Tabelle 4

Stricheigenschaften

| Versuch | 1 | 2 | 3 |
|---|---|---|---|
| Strichauftrag (g/m² je Seite) | ⊢———— 10 ————⊣ | | |
| Dicke (mm) | 0,075 | 0,079 | 0,069 |
| Wasseraufnahme (g/m²) nach Cobb (60 Sek.) | 21 | 22 | 20,5 |
| Glätte n. Bekk. (Sek./ml) | 1110 | 1190 | 640 |
| Rauhigkeit n. Bendtsen (ml/Min) | 25 | 22 | 35 |
| Biegefestigkeit n. Schlenker, 40° | 62 | 58 | 47 |
| IGT-Rupffestigkeit (cm/Sek.) | 124 | 120 | 116 |
| K u. N-Wischtest (%) | 28 | 26 | 22 |
| Tiefdruck-Probedruck | 1 | 2 | 3 |
| Mikrokonturtest | 1 | 2 | 4 |
| Glanz (%) | 24 | 25 | 22 |
| Opazität (%) | 93,9 | 92,6 | 91,1 |
| Weißgrad (%) | 82,3 | 82,4 | 81,6 |
| Faserabdeckung (%) | 78,0 | 76,6 | 69,7 |
| dyn. Bogensteifigkeit | 0,16 | 0,16 | 0,14 |

c) Auswertung

Die getrichenen Papiere von Versuch 1 und 2, deren Streichmassen die erfindungsgemäßen Pfropflatices enthielten, zeigen gegenüber dem mit üblichen, nicht gepfropften Latex gestrichenem Papier (Versuch 3) deutlich verbesserte Strichhärte, Opazität, Bedruckbarkeitseigenschaften und eine hohe Faserabdeckung. Ebenso wurde der Glanz etwas gesteigert. Der Stockpunkt dieser Streichmassen wurde herabgesetzt, so daß eine frühzeitige Strich-Immobilisierung vor der eigentlichen Trocknung möglich wird und die Bindemittelwanderung unterdrückt werden kann. Dadurch konnte die Tendenz zum « Mottling » ebenfalls deutlich herabgesetzt werden.

Hervorzuheben ist die deutliche Erhöhung des Rupfwertes.

d) Prüfmethoden

Folgende Prüfmethoden wurden angewandt: (Prüfklima, soweit nicht anders angegeben: 20 °C, 65 % rel. Luftfeuchte).

pH-Wert:
elektrometrisch nach DIN 53 785

Feststoffgehalt:
a) für Latices: nach DIN 53 189
b) für Streichmassen: Differenz-Wägung nach Trocknung bei 110 °C

Viskosität:
nach DIN 53 788
a) Meßgerät: Brookfield-Viskosimeter LVT, Spindel 3 bzw. 4, 60 UpM
Prüftemperatur: 20 °C
b) Meßgerät zur Aufnahme von Rheogrammen: Rheomat 15, Meßsysteme A-C, Prüftemperatur: 20 °C

Stockpunkt der Streichmassen:
100 g der Streichmasse werden auf einen unglasierten, unter konstanten Bedingungen getrockneten Tonteller ausgegossen. Sobald der Feuchtigkeitsspiegel von der Oberfläche der Streichmasse verschwunden ist, wird eine Probe zur Bestimmung der Feststoffgehalte entnommen.

5

Der so ermittelte Feststoffgehalt in % bezeichnet den Stockpunkt.

Wasserrückhaltevermögen :

10 cm³ der Streichmasse werden mit einem kleinen Rakel, Schlitzhöhe 0,2 mm, innerhalb von wenigen Zehntel-Sekunden — konstante Streichgeschwindigkeit — über eine Probefläche des zu bestreichenden Papieres gestrichen. Durch das in das Papier eindringende Wasser aus der Streichmasse steigt die relative Luftfeuchtigkeit auf der Papierunterseite an. Dieser Feuchteanstieg in Abhängigkeit von der Zeit wird mit einem hygroskopischen Feuchtefühler kontinuierlich registriert. Je stärker der Feuchteanstieg pro Zeit ist, desto schlechter ist das Wasserrückhaltevermögen der Streichmasse. Feuchtefühler : VAISALA (Ausrüstung HM 11) Messungen im Klimaraum (65 % der rel. Luftfeuchte).

Auftragsgewicht :

Flächengewichts-Differenz zwischen klimatisierten Proben von gestrichenem und ungestrichenem Papier (nach DIN 53 111).

Dicke :

Bestimmung nach DIN 53 105

Wasseraufnahme nach Coob :

Bestimmung nach DIN 53 132, 60 sek.

Glätte nach Bekk :

Bestimmung nach DIN 53 107

Rauhigkeit nach Bendtsen :

Bestimmung nach DIN 53 108

Biegefestigkeit nach Schlenker :

Bestimmung nach DIN 53 121, Biegewinkel 40°.

Dynamische Bogensteifigkeit :

Prüfverfahren nach Kodak-Pathé, DIN 53 123

Rupffestigkeit :

Bestimmung nach Tappi-Standard T 499 Su 64 mit dem IGT-Gerät, Typ AC2, und einer Druckspannung von 35 kg/cm². Als Rupffarbe dient die IGT-Rupftestfarbe niedriger Viskosität.

K + N-Test : (Druckfarbenaufnahme)

Ermittlung der Farbaufnahme gestrichener Papiere üblicherweise nach Tappi-Routine Control Method RC 19, Einwirkungszeit : 3 Min.

Der K + N-Wert ist die Differenz des Weißgrades zwischen unbehandeltem und mit Testfarbe behandeltem Papier. Meßgerät : Elrepho, Filter R 457 Testfarbe : K + N-Testing Ink. der K ÷ N-Laboratories Inc., Melrose Park

Mikrokonturtest :

Prüfverfahren zur Beurteilung der Strichgleichmäßigkeit, Durchführung ähnlich K + N-Wischtest. Einwirkungszeit jedoch nur 2 Min., Testfarbe : blaue Testfarbe 3811 der Firma Lorilleux Druckfarben GmbH, Ratingen. Die Beurteilung erfolgt visuell anhand einer fünfstufigen Bewertungsscala, von Note 1 für eine absolut homogene, stippen-, loch- und schleierfreie Testfläche bis Note 5 für eine stark unruhige, ungleichmäßige, fehlstellenreiche Restfläche.

Drucktest :

Tiefdruck-Probedruck auf Probedruckmaschine System Dr. Dürner. Das Druckergebnis wurde visuell geprüft und nach Schärfe der Rasterwiedergabe, Gleichmäßigkeit der Farbaufnahme, Geschlossenheit des Ausdruckes, Druchscheinen und dergleichen bewertet. Dazu wurden 3 klassen festgelegt :

1 = sehr ut,

2 = gut,

3 = schlecht.

Glanz :

Ermittlung des Glanzes nach DIN 67 530 gegen Vergleichsstandard bei einem Meßwinkel von 60°. Meßgerät : Lange Reflektometer.

Opazität :

Bestimmung nach DIN 53 146

Weißgrad :

Messung mit Remissionsphotometer Elrepho, Filter R 457

Faserabdeckung :

Die Streichfarbe wird auf einem schwarzen Karton aufgestrichen (Auftragsgewicht : 8-10 g/m² trocken) und vorsichtig getrocknet. Anschließend wird der Weißgrad (Elrepho, Filter R 457) der gestrichenen Kartonseite gemessen. Er ist umso höher, je stärker der Strich den schwarzen Untergrund abdeckt.

Eine weitere Beurteilung der Faserabdeckung besteht in folgender Methode :

Man fährt die bestrichene Kartonoberfläche mit einem sehr eng gebündelten Strahl eines Spektralphotometers ab und registriert die Remission kontinuierlich über eine Länge des Kartons von etwa 10 cm hinweg. Die dabei auftretenden Remissionsschwankungen ergeben nach stochastischer Auswertung ein Maß für die Gleichmäßigkeit der Faserabdeckung. Querschnitt des Beleuchtungsstrahls 0.2 × 2 mm². Rechteckblende.

### Beispiel 2

**a) Herstellung des Pfropflatex**

Wie bei Beispiel 1 unter a) beschrieben, werden einem Styrol-Butadien-Latex wie bei Beispiel 1, mit einer höheren Filmhärte von ca. 80 °Sh A, und etwas vermindertem Pigmentbindevermögen

2 % Acrylamid = Pfropf-Latex C

aufgepfropft.

Die Latexeigenschaften sind in Tabelle 5 aufgeführt.

Tabelle 5

| Latex | C | unbehandeltes Pfropfsubstrat |
|---|---|---|
| Feststoffgehalt % | 50 | 50 |
| pH-Wert | 5,3 | 5,1 |
| Viskosität mPa.s | 180 | 90 |
| Filmhärte °Sh A | 90—79 | 88—61 |

**b) Herstellung der Streichmasse und Durchführung des Streichversuches**

Erfolgt unter den gleichen Bedingungen wie bei Beispiel 1 unter b) beschrieben. Zusätzlich wurden Versuche (Versuch 6 und 7) mit einem Binderanteil von 5 % unter sonst gleichen Bedingungen durchgeführt zur Prüfung der Bedruckbarkeit im Tiefdruckverfahren. Die Zusammensetzungen sind in Tabelle 6, die Eigenschaften der Streichmassen in Tabelle 7 beschrieben.

Auch bei diesen Versuchen trat, auch nach längerer Laufzeit, kein Koagulat oder Belag am Schaber auf. Ebenso trat kein Durchschlagen der Streichfarbe (Belegen der Gegenwalze) auf.

Die beidseitig gestrichenen Papiere wurden anschließend über einem Superkalander satiniert und nach Klimatisierung geprüft. Die Stricheigenschaften sind in Tabelle 8 zusammengestellt.

Tabelle 6

Zusammensetzung der Papierstreichmassen in g

| Versuch | 4 | 5 | 6 | 7 |
|---|---|---|---|---|
| Wasser zum Dispergieren | | 53,8 | | |
| Wasser zur Endeinstellung | | 26,2 | | 27,1 |
| Natriumpolyphosphat | | 0,3 | | |
| China Clay | | 100 | | |
| Pfropflatex C | 20 | — | 10 | — |
| Pfropfsubstrat | — | 20 | — | 10 |
| pH-Wert | | 8,5 | | |
| Feststoffgehalt (%) | | 55 | | |

## 0 058 366

### Tabelle 7

#### Eigenschaften der Papierstreichmassen

| Versuch | 4 | 5 | 6 | 7 |
|---|---|---|---|---|
| Feststoffgehalt (%) | 55,2 | 55,1 | 55,1 | 54,9 |
| pH-Wert | 8,5 | 8,6 | 8,4 | 8,5 |
| Viskosität (mPa.s) | | | | |
| Brookfield, sofort | 385 | 110 | 234 | 105 |
| Brookfield n. 24 Std. | 445 | 170 | 310 | 180 |
| Rheomat | | | | |
| bei $D = 3,5.10^1$ | 472 | 165 | 345 | 160 |
| bei $D = 1.10^3$ | 38 | 27 | 43 | 25 |
| Stockpunkt (%) | 76,2 | 7°,8 | 75,4 | 77,6 |
| Wasserrückhaltevermögen (Vergleich zum nicht gepfropften Latex) | etwas verbessert | | etwas verbessert | |

### Tabelle 8

#### Stricheigenschaften

| Versuch | 4 | 5 | 6 | 7 |
|---|---|---|---|---|
| Strichauftrag (g/m² je Seite) | | 10 | | |
| Dicke (mm) | 0,075 | 0,068 | 0,077 | 0,067 |
| Wasseraufnahme (g/m²) nach Cobb (60 Sek.) | 21 | 19,5 | 24 | 22,5 |
| Glätte nach Bekk. (Sek./ml) | 1100 | 680 | 980 | 640 |
| Rauhigkeit nach Bendtsen (ml/Min.) | 24 | 32 | 25 | 35 |
| Biegefestigkeit nach Schlenker, 40° | 40 | 38 | 29 | 26 |
| IGT-Rupffestigkeit (cm/Sek.) | 116 | 98 | 35 | 27 |
| K u. N-Wischtest (%) | 27 | 23 | 32 | 28 |
| Tiefdruck-Probedruck | – | – | 1 | 3 |
| Mikrokonturtest | 1 | 2 | 1 | 3 |
| Glanz (%) | 30 | 27 | 38 | 34 |
| Opazität (%) | 93,2 | 92,7 | 92,0 | 91,6 |
| Weißgrad (%) | 83,7 | 83,5 | 84,0 | 83,8 |
| Faserabdeckung (%) | 78,4 | 73,3 | 80,0 | 75,9 |
| dyn. Bogensteifigkeit | 0,17 | 0,14 | 0,13 | 0,11 |

c) Auswertung

Wie bei Beispiel 1 führen auch die Versuche dieses Beispiels bei Anwendung von erfindungsgemäß modifiziertem Latex, auch mit höherer Filmhärte, zur Verbesserung der Stricheigenschaften und somit zu sehr guten drucktechnischen Eigenschaften, auch für den Tiefdruck. Auf diese Weise kann man ein Papier mit geringem Flächengewicht, aber hoher Bogensteifigkeit herstellen, das sich insbesondere für den Tiefdruck in LWC-Bereich eignet.

## Beispiel 3

Ein relativ harter Styrol-Butadien-Latex mit einer Filmhärte von ca. 95 °Sh A und geringem Pigmentbindevermögen wird gemäß Beispiel 1a gepfropft mit 1,5 % Acrylamid = Pfropflatex D

Mit diesem Beispiel soll die deutliche Erhöhung des Pigmentbindevermögens durch die erfindungsgemäße Behandlung aufgezeigt werden.

Wie bei Beispiel 1 wurde mit Pfropflatex D ein Streichversuch durchgeführt und das gestrichene Papier geprüft.

In den folgenden Tabellen sind Latexeigenschaften, Streichfarbenzusammensetzung und -Daten und Prüfergebnisse aufgeführt.

Dieser Versuch bestätigt die Möglichkeit zur Erhöhung des Bindevermögens eines Papierstreichlatex durch die erfindungsgemäße Behandlung dieses Latex.

### Tabelle 9

| Latex | D | unbehandeltes Pfropfsubstrat |
|---|---|---|
| Feststoffgehalt (%) | 50 | 50 |
| pH-Wert | 5,3 | 5,1 |
| Viskosität mPa.s | 140 | 82 |
| Filmhärte °Sh A | 97–95 | 89–86 |

### Tabelle 10

#### Zusammensetzung der Papierstreichmassen in g

| Versuch | 8 | 9 |
|---|---|---|
| Wasser zum Dispergieren | 53,8 | |
| Wasser zur Endeinstellung | 26,2 | |
| Natriumpolyphosphat | 0,3 | |
| China Clay Dinkie A | 100 | |
| Pfropflatex D | 20 | – |
| Pfropfsubstrat | – | 20 |
| pH-Wert | 8,5 | |
| Feststoffgehalt (%) | 55 | |

### Tabelle 11

#### Eigenschaften der Papierstreichmassen

| Versuch | 8 | 9 |
|---|---|---|
| Feststoffgehalt (%) | 55,0 | 54,9 |
| pH-Wert | 8,4 | 8,5 |
| Viskosität (mPa.s) | | |
| Brookfield, sofort | 185 | 90 |
| Brookfield, n. 24 Std. | 265 | 110 |
| Rheomat | | |
| bei $D = 3,5 \cdot 10^1$ | 210 | 85 |
| bei $D = 1 \cdot 10^3$ | 26 | 21 |
| Stockpunkt (%) | 78,2 | 78,6 |
| Wasserrückhaltevermögen (Vergleich zum nicht gepfropften Latex) | wie Vergleich | |

Tabelle 12

Stricheigenschaften

| Versuch | 8 | 9 |
|---|---|---|
| Strichauftrag (g/m² je Seite) | ⊢——— 10 ———⊣ | |
| Dicke (mm) | 0,75 | 0,75 |
| Wasseraufnahme (g/m²) nach Cobb (60 Sek.) | 21,5 | 21 |
| Glätte n. Bekk. (Sek./ml) | 660 | 590 |
| Rauhigkeit n. Bendtsen (ml/min.) | 26 | 27 |
| Biegefestigkeit n. Schlenker, 40 | 62 | 59 |
| IGT-Rupffestigkeit (cm/Sek.) | 85 | 27 |
| K. u. N-Wischtest (%) | 26 | 28 |
| Tiefdruck-Probedruck | 2 | 3 |
| Mikrokonturtest | 2 | 3 |
| Glanz (%) | 26 | 26 |
| Opazität (%) | 92,5 | 92,6 |
| Weißgrad (%) | 81,8 | 81,9 |
| Faserabdeckung (%) | 71,1 | 69,7 |
| dyn. Bogensteifigkeit | 0,19 | 0,18 |

**Patentansprüche**

1. Wäßrige Dispersionen mit einem Feststoffgehalt von 35 bis 65 Gew.-% eines Pfropfcopolymerisates aus einem Pfropfsubstrat aus einer wäßrigen Dispersion eines Mischpolymerisates auf Basis von zwei oder mehreren der Verbindungen Styrol, Butadien, Isopren, (Meth)-Acrylsäure-$C_1$-$C_{12}$-alkylestern und (Meth)-Acrylsäure, auf das ein oder mehrere hydrophile Monomere aus der Reihe Fumarsäure-, Itakonsäure-, Maleinsäure- oder (Meth)-Acrylsäureamid, Vinylpyrolidon und Ethylenoxid aufgepfropft sind, wobei bis zu 60 % der hydrophilen Monomere durch ein oder mehrere hydrophobe Monomere ersetzt sein können.

2. Dispersionen nach Anspruch 1, wobei die Pfropfsubstrate aus Styrol/Butadien-Mischpolymerisaten mi 40 bis 75 Gew.% Styrol, 21 bis 59 Gew.-% Butadien und 1 bis 4 Gew.-% (Meth)Acrylsäure bestehen.

3. Dispersionen nach Anspruch 1, wobei die Pfropfsubstrate aus Mischpolymerisaten mit 40 bis 75 Gew.-% Styrol, 21 bis 59 Gew.-% Acrylsäure-$C_1$-$C_{12}$-Alkylester und 1 bis 4 Gew.-% (Meth)Acrylsäure bestehen.

4. Dispersionen nach Anspruch 3, wobei die Pfropfsubstrate aus Mischpolymerisaten mit 40 bis 75 Gew.-% Styrol, 21 bis 59 Gew.-% Butylacrylat und 1 bis 4 Gew.-% (Meth)Acrylsäure bestehen.

5. Dispersionen nach Anspruch 1, wobei 0,5 bis 15 Gew.-%, bezogen auf Pfropfsubstrat and hydrophilen Monomeren eingesetzt werden.

6. Dispersionen nach Anspruch 1, wobei 0,5 bis 6 Gew.-% bezogen auf Pfropfsubstrat an (Meth)-Acrylamid als hydrophiles Monomer eingesetzt wird.

7. Verfahren zur Herstellung von wäßrigen Dispersionen gemäß Anspruch 1, dadurch gekennzeichnet, daß man dem Pfropfsubstrat die hydrophilen Monomere, die bis zu 60 Gew.-% durch hydrophobe Monomere ersetzt sein können, zusammen mit Wasser zugibt, und die Pfropfreaktion durch Zugabe eines Polymerisationsinitiators durchführt.

8. Verwendung der wäßrigen Dispersionen gemäß Anspruch 1 als Binder Co-Binder-freier Papierstreichmassen.

**Claims**

1. Aqueous dispersions having a solids-content of 35 to 65 % by weight of a graft copolymer consisting of a graft substrate of an aqueous dispersion of a copolymer based on two or more of the compounds styrene, butadiene, isoprene, (meth)acrylic acid $C_1$-$C_{12}$ alkyl esters and (meth)acrylic acid, on to which one or more hydrophilic monomers from the series comprising fumaric acid, itaconic acid, maleic acid or (meth)acrylic acid amide, vinyl pyrrolidone and ethylene oxide are grafted, it being possible for up to 60 % of the hydrophilic monomers to be replaced by one or more hydrophobic monomers.

2. Dispersions according to Claim 1, wherein the graft substrates consist of styrene/butadiene copolymers containing 40 to 75 % by weight of styrene, 21 to 59 % by weight of butadiene and 1 to 4 % by weight of (meth)acrylic acid.

3. Dispersions according to Claim 3, wherein the graft substrates consist of copolymers containing 40 to 75 % by weight of styrene, 21 to 59 % by weight of acrylic acid $C_1$-$C_{12}$ alkyl ester and 1 to 4 % by weight of (meth)acrylic acid.

4. Dispersions according to Claim 1, wherein the graft substrates consist of copolymers containing 40 to 75 % by weight of styrene, 21 to 59 % by weight of butyl acrylate and 1 to 4 % by weight of (meth)acrylic acid.

5. Dispersions according to Claim 1, wherein 0.5 to 15 % by weight, based on the graft substrate, of hydrophilic monomers are used.

6. Dispersions according to Claim 1, wherein 0.5 to 6 % by weight, based on the graft substrate, of (meth)acrylamide are used as the hydrophilic monomer.

7. Process for the preparation of aqueous dispersions according to Claim 1, characterised in that the hydrophilic monomers, up to 60 % by weight of which can be replaced by hydrophobic monomers, are added, together with water, to the graft substrate, and the grafting reaction is carried out by the addition of a polymerisation initiator.

8. Use of the aqueous dispersions according to Claim 1 as binders for paper-coating compositions which do not contain any co-binders.


**Revendications**

1. Dispersions aqueuses à teneur en matières solides de 35 à 65 % en poids, d'un copolymère greffé obtenu à partir d'un substrat de greffage formé d'une dispersion aqueuse d'un copolymère à base de deux ou plus de deux des composés styrène, butadiène, isoprène, esters d'alkyle en $C_1$ à $C_{12}$ d'acide (méth)-acrylique et acide (méth)-acrylique, sur lequel sont greffés un ou plusieurs monomères hydrophiles de la série acide fumarique, acide itaconique, acide maléique ou amide d'acide (méth)-acrylique, vinylpyrrolidone et oxyde d'éthylène, jusqu'à 60 % des monomères hydrophiles pouvant être remplacés par un ou plusieurs monomères hydrophobes.

2. Dispersions suivant la revendication 1, dans lesquelles les substrats de greffage sont formés de copolymères styrène/butadiène avec 40 à 75 % en poids de styrène, 21 à 59 % en poids de butadiène et 1 à 4 % en poids d'acide (méth)-acrylique.

3. Dispersions suivant la revendication 3, dans lesquelles les substrats de greffage sont formés de copolymères comprenant 40 à 75 % en poids de styrène 21 à 59 % en poids d'ester d'alkyle en $C_1$ à $C_{12}$ d'acide acrylique et 1 à 4 % en poids d'acide (méth)-acrylique.

4. Dispersions suivant la revendication 1, dans lesquelles les substrats de greffage sont formés de copolymères comprenant 40 à 75 % en poids de styrène, 21 à 59 % en poids d'acrylate de butyle et 1 à 4 % en poids d'acide (méth)-acrylique.

5. Dispersions suivant la revendication 1, dans lesquelles on utilise 0,5 à 15 % en poids de monomères hydrophiles par rapport au substrat de greffage.

6. Dispersions suivant la revendication 1, dans lesquelles on utilise 0,5 à 6 % en poids de (méth)-acrylamide comme monomère hydrophile, par rapport au substrat de greffage.

7. Procédé de production de dispersions aqueuses suivant la revendication 1, caractérisé en ce qu'on ajoute au substrat de greffage les monomères hydrophiles qui peuvent être remplacés jusqu'à 60 % en poids par des monomères hydrophobes, ainsi que de l'eau et on conduit la réaction de greffage par addition d'un initiateur de polymérisation.

8. Utilisation des dispersions aqueuses suivant la revendication 1 comme liants pour compositions de couchage du papier dépourvues de co-liants.